# EUROPEAN PATENT APPLICATION

(11) **EP 4 279 757 A1**
(43) Date of publication of application: **22.11.2023**
(21) Application number: 22739451.7
(22) Date of filing: 13.01.2022
(51) Int. Cl.: F16C 29/06, F16C 33/62, F16C 33/64

(54) **LINEAR MOTION GUIDE DEVICE**

(30) Priority: 13.01.2021 JP 2021003809
(71) Applicant: NSK Ltd., Tokyo 141-8560 (JP)
(72) Inventor: OHKUBO, Tsutomu, Fujisawa-shi, Kanagawa 252-0811 (JP)
(74) Representative: SSM Sandmair
(86) International application number: PCT/JP2022/000926
(87) International publication number: WO 2022/154046

(57) **Abstract**

A linear motion guide device having a long-life slider is provided. The linear motion guide device includes a guide rail, a plurality of rolling elements, and a slider. The material of the slider body 11 is alloy steel containing 0.1 mass% or more and less than 0.3 mass% of C, 0.5 mass% or more and 1.5 mass% or less of Cr, and 0.1 mass% or more and 0.4 mass% or less of Si, with the balance being Fe and inevitable impurities. An amount of retained austenite in a surface layer 14F of a slider-side rolling groove 14 subjected to a carburizing heat treatment is 15 vol% or more and 45 vol% or less. The surface hardness of the slider-side rolling groove 14 is Hv 650 or more.

## Description

### Field

The present disclosure relates to a linear motion guide device provided in a guide unit of a machine tool, a manufacturing device, a measuring instrument, or the like, for linearly moving a moving member such as a table. Background

A linear motion guide device includes a guide rail extending in an axial direction and having ball rolling grooves formed on both side surfaces, a slider disposed so as to straddle the guide rail and having a ball rolling groove formed at a position facing the rolling grooves of the guide rail, both ends of a ball return path formed in parallel with the ball rolling path, and a ball direction changing path connecting the ball rolling path and both ends of the ball return path, and a large number of balls arranged in a ball circulation path formed by the ball rolling grooves of the guide rail and the ball rolling groove, the ball return path, and the direction changing path of the slider. The guide rail of the linear motion guide device supports the slider so as to be relatively movable in the axial direction while receiving a load applied to the slider via the balls. When the guide rail moves with the load applied to the slider, the load applied to the guide rail moves together with the slider. On the other hand, since the slider always receives a load, there is a problem that the life is generally shorter than that of the guide rail.

One of the factors that cause a decrease in life of the slider is contamination of lubricating oil with foreign matter. In the use environment of the linear motion guide device, metal chips, scraps, burrs, abrasion powder, and the like are mixed into the lubricating oil as the linear motion guide device operates. Such foreign matter is sandwiched between the ball rolling groove of the guide rail or the slider and the balls, thereby damaging the rolling groove and the balls, and reducing the life of the balls.

Furthermore, since the ball rolling grooves and the balls are repeatedly subjected to rolling contact, there is a possibility that mottled microholes are generated due to fatigue and the life is reduced. As a countermeasure against this, Patent Literature 1 and Patent Literature 2 describe a method in which spheroidized carbide is precipitated on a surface of a low to mediumcarbon low alloy steel by heat treatment such as carburization to improve hardness of the steel surface and improve resistance to damage (pitching) caused by fatigue.

However, when the surface hardness of the rolling grooves and the balls is improved, the manner in which the indentation is formed by the foreign matter becomes light, but on the other hand, the toughness of track grooves and the balls becomes poor, and cracks are generated from a damaged portion caused by the foreign matter present in the lubricating oil, and flaking occurs from the cracks as a starting point, and there is a possibility that early breakage occurs.

On the other hand, Patent Literature 3 describes a linear motion guide device in which a slider body is mainly made of alloy steel containing 0.3 to 0.7 mass% of C and 1 to 3 mass% of Cr. On a surface of the slider body, there are retained austenite and fine carbides or carbonitrides.

### Citation List

### Patent Literature

Patent Literature 1: JP S62-24499 B
Patent Literature 2: JP H02-34766 A
Patent Literature 3: JP 2017-110751 A

### Summary

### Technical Problem

Patent Literature 3 describes in [0033] that "when the content of C is less than 0.3 wt% at the time of performing surface curing by carburization or carbonitriding, in order to obtain the intended surface hardness of the present invention, it is necessary to increase an amount of C or an amount of N entering the calcined steel by carburization or carbonitriding. For this reason, the time for carburization and carbonitriding heat treatment becomes long, and heat treatment productivity decreases. Furthermore, the hardness of a core (core portion) is insufficient, the core is plastically deformed, and the life of the linear motion guide device is reduced.". However, in the medium-high carbon steel in which the content of C is 0.3% or more, retained austenite exists in the core after carburization, and there is a possibility that dimensional stability is deteriorated. Furthermore, in Patent Literature 3, since a material having a relatively high carbon concentration (for example, C: high carbon chromium bearing steel of about 0.7 to 1.2 vol%) is used for the base material of the slider body, the cost required for the material increases.

An object of the present disclosure is to provide a linear motion guide device having a long-life slider. Solution to Problem

A linear motion guide device according to an embodiment comprising: a guide rail provided with a rail-side rolling groove along a longitudinal direction; a plurality of rolling elements; and a slider including a slider body provided with a slider-side rolling groove on which the rolling elements roll between the slider body and the rail-side rolling groove, wherein a material of the slider body is alloy steel containing 0.1 mass% or more and less than 0.3 mass% of C, 0.5 mass% or more and 1.5 mass% or less of Cr, and 0.1 mass% or more and 0.4 mass% or less of Si, a balance being Fe and inevitable impurities, an amount of retained austenite in a surface layer of the slider-side rolling groove subjected to a carburizing heat treatment is 15 vol% or more and 45 vol% or less, and a surface hardness of the slider-side rolling groove is Hv 650 or more.

As a result, by using the inexpensive alloy steel having a low carbon content, and by being subjected to the carburizing heat treatment, fine carbide is precipitated and hardened on a surface layer of the slider-side rolling groove, and it is possible to compensate for the decrease in surface hardness due to the presence of retained austenite. As a result, it is possible to provide the long-life linear motion guide device at low cost not only under foreign matter mixing lubrication but also under clean lubrication.

According to a desirable embodiment, a hardened layer formed by induction hardening exists on a surface of the rail-side rolling groove of the guide rail. As a result, since the heat treatment of the guide rail longer than the slider body is induction hardening, the productivity of the linear motion guide device is improved.

According to a desirable embodiment, the material of the slider body contains 0.5 mass% or more and 0.35 mass% or less of Mo. As a result, carburization of the surface layer of the slider-side rolling groove is promoted, hardenability of the core part is improved, and temper brittleness is suppressed.

### Advantageous Effects of Invention

The present disclosure provides a linear motion guide device having a long-life slider.

### Brief Description of Drawings

FIG. 1 is a perspective view illustrating a linear motion guide device according to the present embodiment.
FIG. 2 is a top view in which a part of the linear motion guide device according to the present embodiment is broken.
FIG. 3 is a cross-sectional view of a slider taken along line III-III in FIG. 1.
FIG. 4 is a cross-sectional view of a guide rail taken along line IV-IV in FIG. 1.

### Description of Embodiments

A mode (embodiment) for carrying out the present invention will be described in detail with reference to the drawings. The present invention is not limited by the contents described in the following embodiments. Furthermore, the constituent elements described below include those that can be easily assumed by those skilled in the art and those that are substantially the same. Moreover, the constitution elements described below can be appropriately combined.

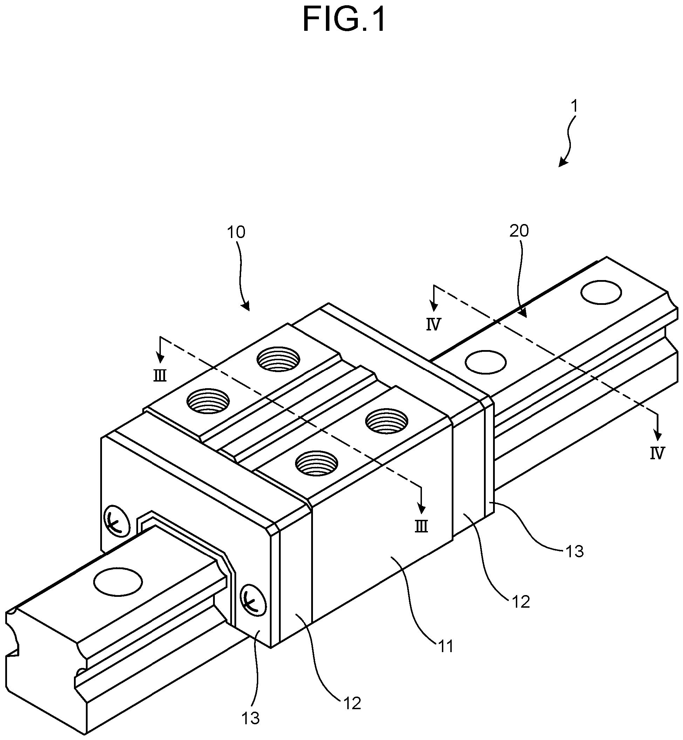

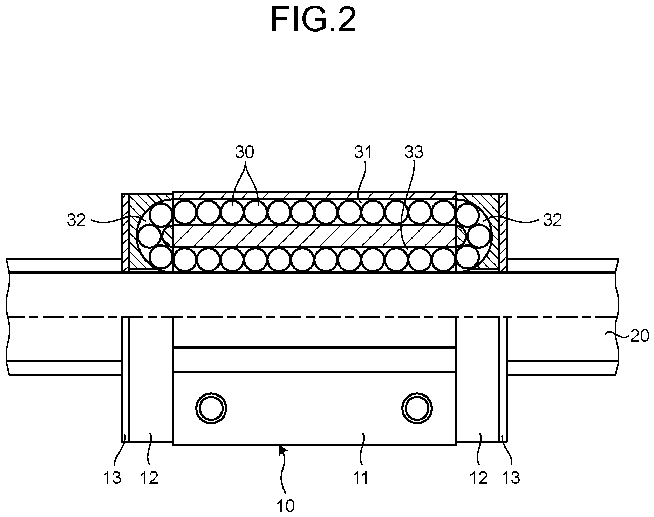

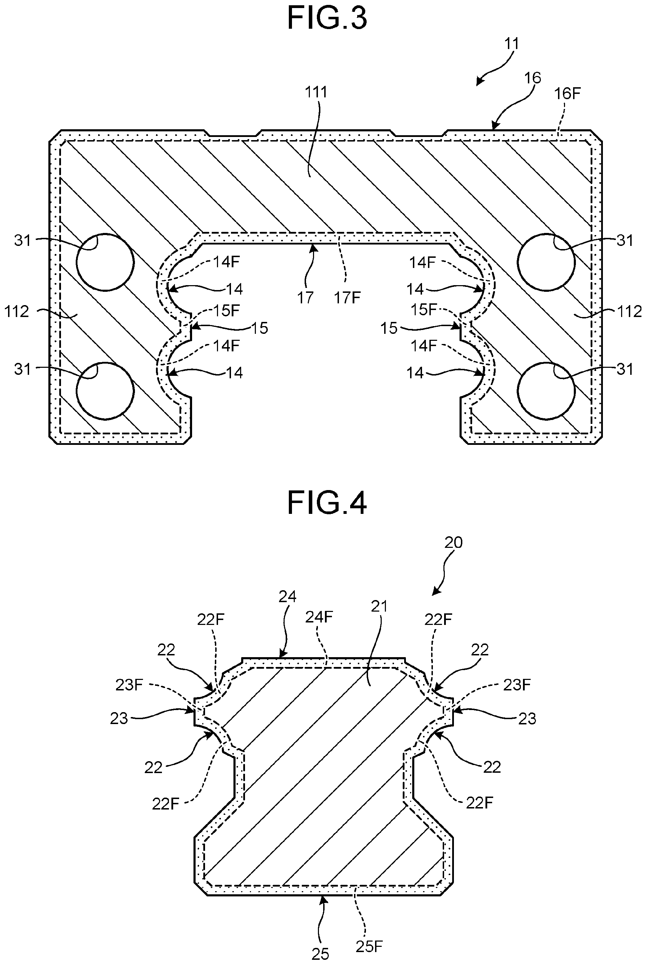

FIG. 1 is a perspective view illustrating a linear motion guide device according to the present embodiment. FIG. 2 is a top view in which a part of the linear motion guide device according to the present embodiment is broken. FIG. 3 is a cross-sectional view of a slider taken along line III-III in FIG. 1. FIG. 4 is a cross-sectional view of a guide rail taken along line IV-IV in FIG. 1.

As illustrated in FIG. 1, a linear motion guide device 1 includes a guide rail 20 and a slider 10. As illustrated in FIG. 1, the guide rail 20 extends linearly in a first direction (hereinafter, referred to as a longitudinal direction).

As illustrated in FIG. 1, the slider 10 includes a slider body 11, an end cap 12, a side seal 13, and rolling elements 30 (see FIG. 2). The end cap 12 is fixed to one side surface and the other side surface of the slider body 11 with a bolt or the like. As illustrated in FIG. 2, a direction changing path 32 is formed inside the end cap 12. As illustrated in FIG. 1, the side seals 13, which are dustproof components, are attached to outermost ends of the slider 10 in the longitudinal direction. These side seals 13 seal a gap between the guide rail 20 and the slider 10 to prevent foreign matter such as dust from entering from the outside.

As illustrated in FIG. 3, the slider body 11 includes a body portion 111 and leg portions 112 extending in a second direction intersecting the longitudinal direction of the guide rail 20 from both sides of the body portion 111 in a width direction, and has a substantially U-shaped cross section. A moving member such as a table is attached to an upper surface 16 of the slider body 11 illustrated in FIG. 3. On an inner side surface of each of the leg portions 112, two slider-side rolling grooves 14 are formed. The number of the slider-side rolling grooves 14 is an example and is not limited to two.

As illustrated in FIG. 3, a plurality of circulation passages 31 penetrate the leg portion 112. As illustrated in FIG. 2, one of the circulation passages 31 communicates with each direction changing path 32 inside the end cap 12.

The guide rail 20 is inserted into a space surrounded by a lower surface 17 of the body portion 111 and the inside of the leg portion 112. As a result, the lower surface 17 of the body portion 111 illustrated in FIG. 3 and an upper surface 24 of the guide rail 20 illustrated in FIG. 4 face each other. Furthermore, an inner surface portion 15 of the leg portion 112 and a side surface portion 23 of the guide rail 20 face each other. A lower surface 25 of the guide rail 20 illustrated in FIG. 4 is not covered with the slider body 11.

As illustrated in FIG. 4, on each of the side surfaces of the guide rail 20, two rail-side rolling grooves 22 are formed along the longitudinal direction of the guide rail 20. The number of the rail-side rolling grooves 22 is an example and is not limited to two.

Each of the slider-side rolling grooves 14 illustrated in FIG. 3 faces each of the rail-side rolling grooves 22 illustrated in FIG. 4, and a large number of the rolling elements 30 (see FIG. 2) are provided between the rail-side rolling groove 22 and the slider-side rolling groove 14. When the slider 10 relatively moves in the longitudinal direction of the guide rail 20, these rolling elements 30 roll on a rolling path 33 formed between the rail-side rolling groove 22 and the slider-side rolling groove 14. The rolling path 33 formed between the rail-side rolling groove 22 and the slider-side rolling groove 14 communicates with the direction changing path 32 formed in each end cap 12. Then, the rolling elements 30 that have rolled on the rolling paths 33 formed between the rail-side rolling grooves 22 and the slider-side rolling grooves 14 enter the direction changing paths 32 formed in the end caps 12, respectively, where rolling directions of the rolling elements 30 are reversed.

Each of the rolling elements 30 of the present embodiment has a spherical shape, but may be a cylindrical roller. Furthermore, the number of rolling paths 33 formed between the rail-side rolling groove 22 and the slider-side rolling groove 14 may be one or three on each of the left and right sides.

Before quenching, a material of the slider body 11 is alloy steel containing 0.1 mass% or more and less than 0.3 mass% of C, 0.5 mass% or more and 1.5 mass% or less of Cr, and 0.1 mass% or more and 0.4 mass% or less of Si, with the balance being Fe and inevitable impurities. Since C is 0.1 mass% or more and less than 0.3 mass%, the cost of the alloy steel can be reduced. Since Cr is contained in an amount of 0.5 mass% or more and 1.5 mass% or less, affinity with C is high, and carburization of the surface layer is promoted. When Cr is contained in an amount of more than 1.5 mass%, excessive carburization of the surface layer is likely to occur, and therefore it is desirable that Cr is contained in an amount of 1.5 mass% or less. Since 0.1 mass% or more of Si is contained, the strength of the slider body 11 is increased. When Si is contained in an amount of more than 0.4 mass%, ductility decreases, and therefore it is desirable that Si is contained in an amount of 0.4 mass% or less.

Before quenching, a more desirable material of the slider body 11 is alloy steel containing 0.1 mass% or more and less than 0.3 mass% of C, 0.5 mass% or more and 1.5 mass% or less of Cr, 0.1 mass% or more and 0.4 mass% or less of Si, and 0.5 mass% or more and 0.35 mass% or less of Mo, with the balance being Fe and inevitable impurities. Since Mo is contained in an amount of 0.5 mass% or more and 0.35 mass% or less, carburization of the surface layer is promoted, hardenability of the core part is improved, and temper brittleness is suppressed.

As illustrated in FIG. 3, at least surface layers 14F, 15F, 16F, and 17F are formed on the surface of the slider body 11 by the heat treatment. The surface layer 14F is a layer in which the surface of the slider-side rolling groove 14 is carburized. The surface layer 15F is a layer in which the inner surface portion 15 of the leg portion 112 is carburized. The inner surface portion 15 of the leg portion 112 is a portion of the inner surface of the leg portion 112 where the slider-side rolling groove 14 is not provided. The inner surface portion 15 of the leg portion 112 of the present embodiment is a portion between the two slider-side rolling grooves 14 in the inner surface of the leg portion 112. The surface layer 16F is a layer in which the upper surface 16 of the slider body 11 is carburized. The surface layer 17F is a layer in which the lower surface 17 of the slider body 11 is carburized.

In the surface layers 14F, 15F, 16F, and 17F, some untransformed austenite does not become martensite and exists in the structure. Here, an amount of retained austenite (yR vol%) in the surface layer 14F is 15 vol% or more and 45 vol% or less. As a result, a surface hardness (Hv) of the surface layer 14F becomes Hv 650 or more. An amount of retained austenite in the surface layer 14F can be set in a range of 15 vol% or more and 45 vol% or less by adjusting a quenching temperature, time, and the concentration of C dissolved in the matrix of the slider body 11. Alternatively, the slider-side rolling groove 14 can change a thickness of the surface layer 14F by grinding to set the amount of retained austenite in the surface layer 14F to the range of 15 vol% or more and 45 vol% or less. Since machining accuracy is required for the slider-side rolling groove 14 and the upper surface 16 of the slider body 11, it is desirable that the slider-side rolling groove and the upper surface are ground. Therefore, the surface layer 14F has a smaller amount of retained austenite than the surface layer 15F. The surface layer 16F has a smaller amount of retained austenite than the surface layer 17F. Note that the amount of retained austenite can be measured with an X-ray residual stress measuring machine by irradiation with an X-ray.

In a case where an indentation occurs on a track surface (rolling surface) due to foreign matter, an edge of the indentation swells small, and when the rolling elements pass through the edge, stress concentrates and a surface crack may occur. When the surface crack spreads, fatigue fracture may eventually occur. When the retained austenite in the surface layer of the track surface is 15 vol% or more, the bulge of the edge of the indentation is alleviated, so that stress concentration at the time of passing the rolling elements is suppressed. This suppresses a decrease in life due to fatigue fracture. Furthermore, when the amount of retained austenite exceeds 40 vol%, the hardness of the track surface (rolling surface) cannot be secured, and the life may be reduced.

Here, the surface layers 14F, 15F, 16F, and 17F contain fine carbides. The fine carbide is a carbide or a carbonitride, and the fine carbide has an average particle diameter of 0.5 µm or more and 1.5 µm or less. When the average particle diameter of the fine carbide is less than 0.5 µm, the life improvement is insufficient and the wear resistance is deteriorated. Furthermore, when the average particle diameter of the fine carbide exceeds 1.5 µm, the fine carbide becomes a stress concentration source, cracks and the like are likely to occur in the surface layer 14F, and the life is reduced. The average particle diameter of the fine carbide can be measured by image analysis from observation of a captured image of a scanning electron microscope.

As described above, even when an inexpensive alloy steel having a low carbon content is used, the fine carbide is precipitated and hardened on the surface layer 14F of the slider-side rolling groove 14 by being subjected to the carburizing heat treatment, and it is possible to compensate for the decrease in surface hardness due to the presence of retained austenite. As a result, it is possible to provide the long-life linear motion guide device 1 at low cost not only under foreign matter mixing lubrication but also under clean lubrication.

The guide rail 20 is induction hardened. Since the heat treatment of the guide rail 20 longer than the slider body 11 is induction hardening, the productivity of the linear motion guide device 1 is improved. As a result, hardened layers 22F, 23F, 24F, and 25F are formed on the surface of the guide rail 20. The hardened layer 22F is a layer formed on the surface of the rail-side rolling groove 22. The hardened layer 23F is a layer formed on the surface of the side surface portion 23 of the guide rail 20. Here, the side surface portion 23 of the guide rail 20 is a portion of the side surface of the guide rail 20 where the rail-side rolling groove 22 is not provided. The hardened layer 24F is a layer formed on the surface of the upper surface 24 of the guide rail 20. The hardened layer 25F is a layer formed on the surface of the lower surface 25 of the guide rail 20.

As described above, the linear motion guide device 1 includes the guide rail 20 provided with the rail-side rolling groove 22 along the longitudinal direction, the plurality of rolling elements 30, and the slider 10. The slider 10 includes the slider body 11 provided with the slider-side rolling groove 14 on which the rolling elements 30 roll between the slider body and the rail-side rolling groove 22. The material of the slider body 11 is alloy steel containing 0.1 mass% or more and less than 0.3 mass% of C, 0.5 mass% or more and 1.5 mass% or less of Cr, and 0.1 mass% or more and 0.4 mass% or less of Si, with the balance being Fe and inevitable impurities. The amount of retained austenite in the surface layer 14F of the slider-side rolling groove 14 subjected to the carburizing heat treatment is 15 vol% or more and 45 vol% or less. Furthermore, the slider-side rolling groove 14 has a surface hardness of Hv 650 or more.

As a result, the life of the slider-side rolling groove 14 becomes long and the linear motion guide device 1 becomes inexpensive not only under lubrication in which foreign matter is mixed but also under clean lubrication.

Although the embodiments of the present disclosure have been exemplified above, the embodiments are merely examples, and are not intended to limit the scope of the invention. The present disclosure can be implemented in various other modes, and various omissions, substitutions, combinations, and changes can be made without departing from the gist of the invention. These various modes and modified modes are included in the scope and gist of the invention, and are included in the invention described in the claims and the equivalent scope thereof. Furthermore, specifications (structure, type, direction, shape, size, length, width, thickness, height, number, arrangement, position, material, and the like) of each configuration, shape, and the like can be appropriately changed and implemented.

For example, the material of the guide rail 20 may be the same low-carbon steel as the material of the slider body 11, and the guide rail 20 may be subjected to a heat treatment that sequentially performs the carburizing heat treatment (a), the quenching treatment (b), and the tempering treatment (c) described above after processing. That is, before quenching, the material of the guide rail 20 may be alloy steel containing 0.1 mass% or more and less than 0.3 mass% of C, 0.5 mass% or more and 1.5 mass% or less of Cr, and 0.1 mass% or more and 0.4 mass% or less of Si, with the balance being Fe and inevitable impurities. Alternatively, before quenching, the material of the guide rail 20 may be alloy steel containing 0.1 mass% or more and less than 0.3 mass% of C, 0.5 mass% or more and 1.5 mass% or less of Cr, 0.1 mass% or more and 0.4 mass% or less of Si, and 0.5 mass% or more and 0.35 mass% or less of Mo, with the balance being Fe and inevitable impurities.

### Reference Signs List

- 1: LINEAR MOTION GUIDE DEVICE
- 10: SLIDER
- 11: SLIDER BODY
- 12: END CAP
- 13: SIDE SEAL
- 14: SLIDER-SIDE ROLLING GROOVE
- 14F, 15F, 16F, 17F: SURFACE LAYER
- 15: INNER SURFACE PORTION
- 16: UPPER SURFACE
- 17: LOWER SURFACE
- 20: GUIDE RAIL
- 22: RAIL-SIDE ROLLING GROOVE
- 22F, 23F, 24F, 25F: HARDENED LAYER
- 23: SIDE SURFACE PORTION
- 24: UPPER SURFACE
- 25: LOWER SURFACE
- 30: ROLLING ELEMENT
- 31: CIRCULATION PASSAGE
- 32: DIRECTION CHANGING PATH
- 33: ROLLING PATH
- 111: BODY PORTION
- 112: LEG PORTION

## Claims

1. A linear motion guide device comprising:
a guide rail provided with a rail-side rolling groove along a longitudinal direction;
a plurality of rolling elements; and
a slider including a slider body provided with a slider-side rolling groove on which the rolling elements roll between the slider body and the rail-side rolling groove,
wherein a material of the slider body is alloy steel containing 0.1 mass% or more and less than 0.3 mass% of C, 0.5 mass% or more and 1.5 mass% or less of Cr, and 0.1 mass% or more and 0.4 mass% or less of Si, a balance being Fe and inevitable impurities,
an amount of retained austenite in a surface layer of the slider-side rolling groove subjected to a carburizing heat treatment is 15 vol% or more and 45 vol% or less, and
a surface hardness of the slider-side rolling groove is Hv 650 or more.

2. The linear motion guide device according to claim 1, wherein a hardened layer formed by induction hardening exists on a surface of the rail-side rolling groove of the guide rail.

3. The linear motion guide device according to claim 1 or 2, wherein the material of the slider body contains 0.5 mass% or more and 0.35 mass% or less of Mo.
